# EUROPEAN PATENT SPECIFICATION

(11) **EP 3 984 981 B1**
(45) Date of publication and mention of the grant of the patent: **04.03.2026**
(21) Application number: 21201803.0
(22) Date of filing: 11.10.2021
(51) Int. Cl.: C05F 11/00, C05C 11/00, C05F 11/02

(54) **A PLANT GROWTH STIMULATING MIXTURE**
PFLANZENWACHSTUMSSTIMULIERENDES GEMISCH
MÉLANGE STIMULANT LA CROISSANCE DES PLANTES

(30) Priority: 13.10.2020 CZ 20200556
(43) Date of publication of application: 20.04.2022
(73) Proprietor: AGRA GROUP, a.s., 387 15 Strelske Hostice (CZ); Kopenec, Jiri, 130 00 Praha 3, Vinohrady (CZ)
(72) Inventor: Kopanec, Jirí, 13000 Praha 3 - Vinohrady (CZ); Mráz, Jaroslav, 38203 Kremze (CZ); Pluhar, Pavel, 68603 Staré Mesto (CZ)
(74) Representative: Sedlák, Jirí

(56) References cited:
- WO-A1-2014/185794
- CN-A- 107 805 139
- CN-A- 108 934 851
- CN-A- 111 011 649
- RO-A2- 133 307
- US-A1- 2006 168 881
- H. S. SHEKHAR SHARMA ET AL: "Plant biostimulants: a review on the processing of macroalgae and use of extracts for crop management to reduce abiotic and biotic stresses", JOURNAL OF APPLIED PHYCOLOGY., vol. 26, no. 1, 14 August 2013 (2013-08-14), NL, pages 465 - 490, XP055466674, ISSN: 0921-8971, DOI: 10.1007/s10811-013-0101-9

## Description

### Field of Technology

A mixture for stimulating plant growth applicable to the leaf area of monocotyledonous and dicotyledonous plants.

### State of the Art

Fertilisers are currently used extensively in agriculture and at home. Commonly used fertilisers are divided into soil fertilisers and foliar fertilisers. Soil fertilisers are applied in various forms to the soil or the soil surface. It is most often a form of fertilisation by watering, powdering, or immobilised fertilisers - granules or sticks used mainly at home, both for indoor and outdoor plants.

Plant fertilisers usually contain a combination of three basic plant nutrients, which are: nitrogen (N), phosphorus (P) and potassium (K), so-called NPK fertilisers. Fertilisers contain different proportions of the mentioned nutrients, in organic or inorganic form. The most commonly used forms of phosphorus are ammonium or potassium phosphate, which are also a source of nitrogen and potassium. The most frequently used forms of potassium include potassium chloride, potassium nitrate, and potassium sulphate or potassium thiosulphate. These substances are inorganic and as such are difficult for the plant to absorb, and therefore the efficiency of the plant's use of such potassium sources is not high. The dosage of inorganic nutrient sources must therefore be relatively high, all the more so if the fertiliser is applied to the soil surface or into the soil.

The currently widespread intensive agriculture emphasises increasing crop yields. Fertilisers and pesticides, herbicides, or other substances are used to increase yield and maximise agricultural land use, which suffers greatly from such interventions. In addition, fertilisers and other substances often penetrate groundwater or flush into surface waters. Here, they significantly interfere with the ecosystem balance either through their toxic effects or water eutrophication, when algae and cyanobacteria multiply in the ecosystem.

Retafos Prim foliar fertiliser (Agra Group a.s.). Retafos Prim contains:

| Chemical name | 2-Ethanolamine borate | Potassium hydrogen phosphate | Urea | Ammonium polyphosphate | Potassium acetate |
|---|---|---|---|---|---|
| Conc. % wt. | <5 | <30 | <20 | <20 | <10 |

The total amount of nutrients in Retafos Prim foliar fertiliser is as follows:

| | | |
|---|---|---|
| 8.68 % total N | water-soluble total nitrogen | 125 g/L |
| Of which: 6.93 % urea N | water-soluble urea nitrogen | 100 g/L |
| 1.75 % ammonium N | water-soluble ammonium nitrogen | 25 g/L |
| 17.36 % P₂O₅ | water-soluble phosphorus pentoxide | 250 g/L |
| 17.36 % K₂O | water-soluble potassium oxide | 250 g/L |
| 0.35 % B | water-soluble boron in complex with monoethanolamine | 5 g/L |

Retafos Prim fertiliser was developed by Agra Group a.s. as the successor to Retafos foliar fertiliser.

Retafos Prim shows an increase in wheat yield by 1.06 t/ha and an increase in winter rapeseed yield by 1.2 t/ha; increase in winter rapeseed biomass production by 0.47 t/ha. The content of nutrients in the biomass also increased after the application of Retafos Prim compared to the untreated control, as follows: by 19.5 kg/ha of N, by 6.2 kg/ha of P, by 23.1 kg/ha of K, by 13.1 kg/ha of Ca and by 1.8 kg/ha of Mg. After application of the Retafos Prim fertiliser, the content of simple sugars in the roots of winter rapeseed also increased by 50 kg/ha compared to the untreated control.

However, the development went further and the company also improved Retafos Prim. Retafos Prim foliar fertiliser was used to compare the effect of foliar fertiliser according to the invention.

CN 107805139 A describes under Example 3 a nutrient mixture, which is mixed with a standard fertilizer. This nutrient mixture includes following ingredients: 5 parts of wood vinegar, 3 parts of birch wood vinegar, 2 parts of peanut wood vinegar, 5 parts of seaweed extract, 13 parts of urea, 5 parts of polyglutamic acid, 2 parts of boric acid and 3 parts of zinc sulfate, 12 parts of vegetable protein small peptide, 5 parts of gelatin, 13 parts of urea, 1 part ammonia water, 1 part of sodium humate, 3 parts of citric acid, 1 part of fulvic acid and 10 parts of ferrous sulfate. CN111011649A discloses an anti-stress agent for aquaculture comprising betaine, sodium humate, protein powder (=polypeptides) and taurine (an amino acid) in various ratios.

### Description of the Invention

The invention concerns the composition according to claim 1 and its use according to claim 10. Preferred embodiments are according to dependent claims 2-9.

A mixture for stimulating plant growth for extra-root nutrition of monocotyledonous and dicotyledonous plants was developed. It also reduces plant stress and increases crop yields. The stimulating mixture can be applied both to support the plants in a given growing season and with foliar fertiliser in the autumn to support the next growing season, which can be advantageous for winter types of crops. The stimulating mixture contains nutrients that the plant well absorbs through the leaf area. Thanks to the more efficient use of nutrients, foliar fertiliser with the stimulating mixture can be used in lower doses than conventional foliar fertilisers or fertilisers applied on or into the soil. As a result, this significantly reduces the ecological burden on the ecosystem, particularly the penetration of fertilisers through the soil into groundwater or the flushing of fertilisers into surface water.

Surprisingly, it has been found to be very advantageous to apply ammonium nitrogen directly to the leaves of the crops being grown. It is known that ammonium nitrogen in the soil undergoes conversion to nitrate by the action of soil microorganisms and part of it is immobilised by soil microorganisms. Therefore, its sources are not widely used for fertilisation. However, when applied directly to crop leaves, its use in combination with other substances has been shown to be very effective on crop yield.

A stimulating mixture of foliar fertiliser was created, which combines a source of ammonium nitrogen as a mix of peptides and amino acids with betaine and humic substances in a specific ratio. This stimulating mixture of foliar fertiliser, when mixed with the most efficient fertilisers available, further significantly increases crop yields, for example, by 300 kg/ha of cultivated rapeseed and 240 kg/ha of wheat. This raises the yield by up to 46 per cent compared to the control and up to almost 10 per cent compared to the prior art foliar fertiliser and helps to address the increase in the crops grown on limited arable land.

An optimal nutrient ratio of the foliar fertiliser stimulating mixture was developed, namely betaine, humic substances and a mix of peptides and amino acids in the range of 1:0.1 to 0.5:2.5 to 7.5.

Unexpectedly, it has been shown that not all fertilising substances are suitable for combining. Chilean saltpetre, betaine, humate and a mix of peptides and amino acids were used to develop the stimulating mixture of foliar fertiliser. The effect of each of the added components was evaluated separately and in combination. Surprisingly, while betaine, humate and a mix of peptides and amino acids enhance the effects of the original foliar fertiliser and even act synergistically on some crops, Chilean saltpetre had the opposite effect and even reduced the effects of foliar fertiliser. The other three tested components showed an unexpectedly good effect, which was evaluated as synergistic for some crops, i.e. higher than the sum of the effects of the individual components. Therefore, all three tested components - betaine, humate and a mix of peptides and amino acids - were selected to produce the foliar fertiliser stimulating mixture according to the invention.

The stimulating mixture according to the invention is preferably produced as a concentrate which contains 50 to 60 percent by weight of dry matter. Preferably, the stimulating mixture is mixed with the foliar fertiliser in a dry matter ratio of 1:10 to 100.

The concentrate of the stimulating mixture of foliar fertiliser mixed with foliar fertiliser is further diluted with water as needed by the crop to be fertilised and according to the concentration of foliar fertiliser.

The stimulating mixture is preferably mixed with a foliar fertiliser concentrate, and this mixture is then diluted with water in following ratio: 5 kg of mixture of -the stimulation mixture concentrate and the foliar fertilizer concentrate- and 120 to 2,500 kg of water. Preferable concentration of betain in said concentrate mixture of -the stimulation mixture concentrate and the foliar fertilizer concentrate- before dilution is 1 to 25 g/l, humic substances 0.4 to 10 g/l and the mix of peptides and amino acids 5 to 65 g/l of the concentrate mixture of the stimulation mixture concentrate and the foliar fertilizer concentrate. When recalculated with water, preferable application concentration of betain is 2 to 1,050 mg/l, humic substances 0.2 to 525 mg/l and the mix of peptides and amino acids 5 to 7,875 mg/l.

An example of a specific composition of the foliar fertiliser stimulating mixture of the invention is the following mixture of ingredients:

| | wt% of dry matter | wt% of concentrate |
|---|---|---|
| Water | 0 | 45.95 |
| H₂O | | |
| Betaine hydrochloride (CH₃)₃NCH₂COOH Cl | 12.56 | 6.79 |
| Sodium humate | 4.04 | 2.18 |
| C₉H₈O₄Na₂ | | |
| Mix of peptides and amino acids | 83.41 | 45.08 |

The mix of peptides and amino acids preferably contains 15 to 35 wt% of glycine, 5 to 25 wt% of proline, 5 to 25 wt% of glutamic acid, 5 to 25 wt% of alanine and 5 to 25 wt% of hydroxyproline in the dry matter.

The application of the stimulating mixture takes place together with the application of foliar fertiliser by spraying on the leaves of the plants, preferably in the plant growth phase, preferably at BBCH 14 to 16, when the plant has 4 to 6 developed leaves in dicotyledonous plants; in monocotyledonous plants, the application is preferably carried out when the plant has two developed leaves. The application of the foliar fertiliser stimulating mixture can take place in winter plant species in the autumn; in the case of other plant species the application of the foliar fertiliser stimulating mixture takes place preferably in spring. The foliar fertiliser stimulating mixture is usually applied one or more times with an interval of at least 4 days between applications. Preferably, the application of the foliar fertiliser mixture is carried out twice, with an interval between applications of five to nine days. Multiple applications are particularly advantageous for plants grown in habitats with an insufficient supply of nutrients in the soil, or under conditions where nutrients in the soil cannot be absorbed by the plant roots - for example, they are bound in porous rocks or clays. The application of a stimulating mixture of foliar fertiliser is also advantageous in domestic conditions, especially for fertilising crops.

It has been shown that the application of the stimulating mixture with foliar fertiliser according to the prior art Retafos Prim increased the yield of wheat by 23 per cent compared to the prior art, i.e. from 1.06 t/ha to 1.3 t/ha. The increased yield of winter rapeseed was demonstrated by the leaf fertiliser according to the prior art Retafos Prim when applied with the stimulating mixture according to the invention by 25 per cent from 1.2 t/ha to 1.5 t/ha. The increase in the production of winter rapeseed biomass after the application of foliar fertiliser according to the prior art Retafos Prim with the stimulating mixture according to the invention was compared to the untreated control by 49.54 per cent from 2.2 t/ha to 3.29 t/ha, compared to the prior art even by 23.22 per cent, i.e. from 2.67 t/ha to 3.29 t/ha.

The content of nutrients in the biomass also increased against the untreated control after the application of foliar fertiliser compared to the prior art, as follows:
by 28 per cent of N, i.e. from 19.5 kg/ha of N to 25 kg/ha of N,
by 11 per cent of P, i.e. from 6.2 kg/ha of P to 6.9 kg/ha of P,
by 18 per cent of K, i.e. from 23.1 kg/ha of K to 27.2 kg/ha of K,
by 20 per cent of Ca, i.e. from 13.1 kg/ha of Ca to 15.7 kg/ha of Ca,
and by 17 per cent of Mg, i.e. from 1.8 kg/ha of Mg to 2.1 kg/ha of Mg.

After application of the fertiliser according to the invention, the content of simple sugars in the roots of winter rapeseed also increased. Compared to the prior art, this was an increase of 28.57 per cent, from 210 kg/ha to 270 kg/ha compared to the untreated control.

### Summary of presented drawings

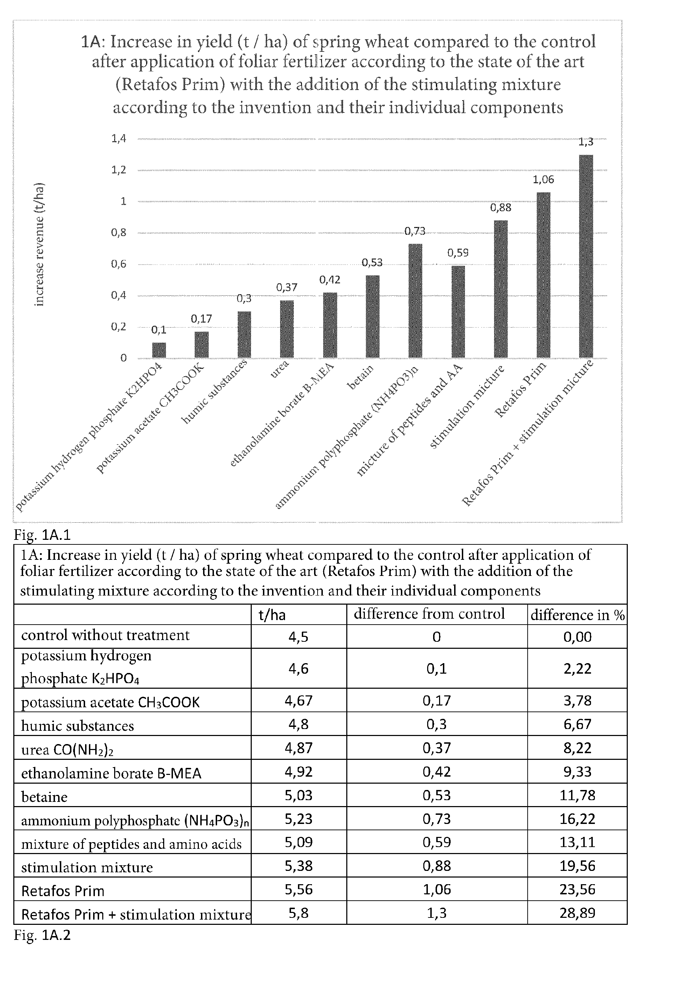

Fig. 1A.1 Increase in yield (t/ha) of spring wheat compared to the control after application of the prior art foliar fertiliser (Retafos Prim) with the addition of a stimulating mixture according to the invention and their individual components, graph
Fig. 1A.2 Increase in yield (t/ha) of spring wheat compared to the control after application of the prior art foliar fertiliser (Retafos Prim) with the addition of the stimulating mixture according to the invention and their individual components, table

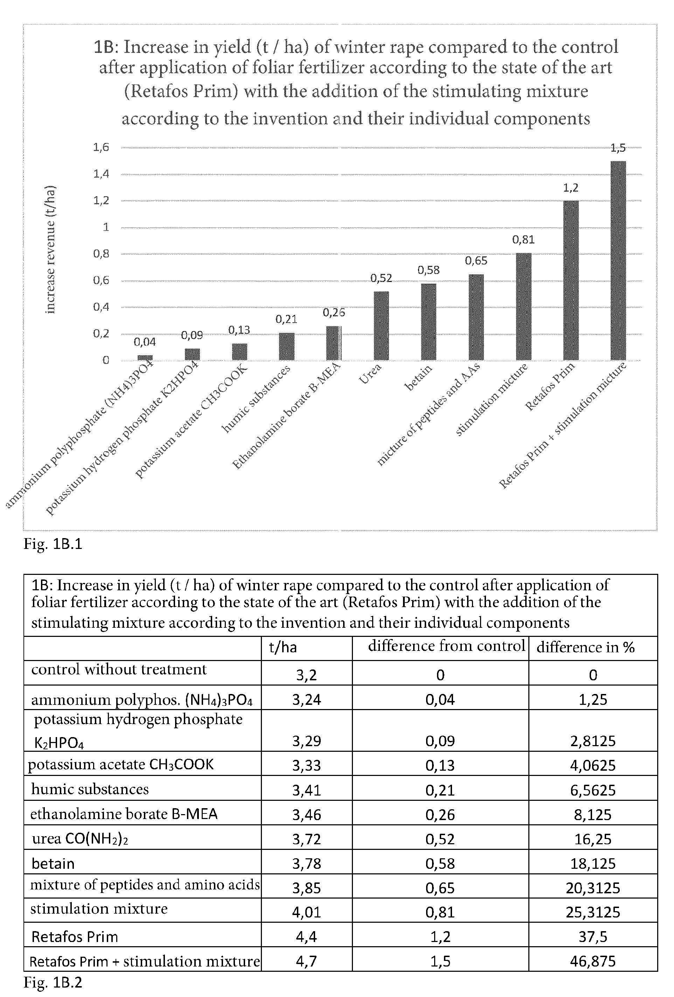

Fig. 1B.1 Increase in yield (t/ha) of winter rapeseed compared to the control after application of the prior art foliar fertiliser (Retafos Prim) with the addition of the stimulating mixture according to the invention and their individual components, graph
Fig. 1B.2 Increase in yield (t/ha) of winter rapeseed compared to the control after application of the prior art foliar fertiliser (Retafos Prim) with the addition of the stimulating mixture according to the invention and their individual components, table
Fig. 2A Increase in biomass production (t/ha) of winter rapeseed after autumn application of the prior art fertiliser (Retafos Prim) with the addition of the stimulating mixture according to the invention
Fig. 2B.1 Nutrient content in biomass (kg/ha) of winter rapeseed after autumn application of the prior art fertiliser (Retafos Prim) with the addition of the stimulating mixture according to the invention, graph

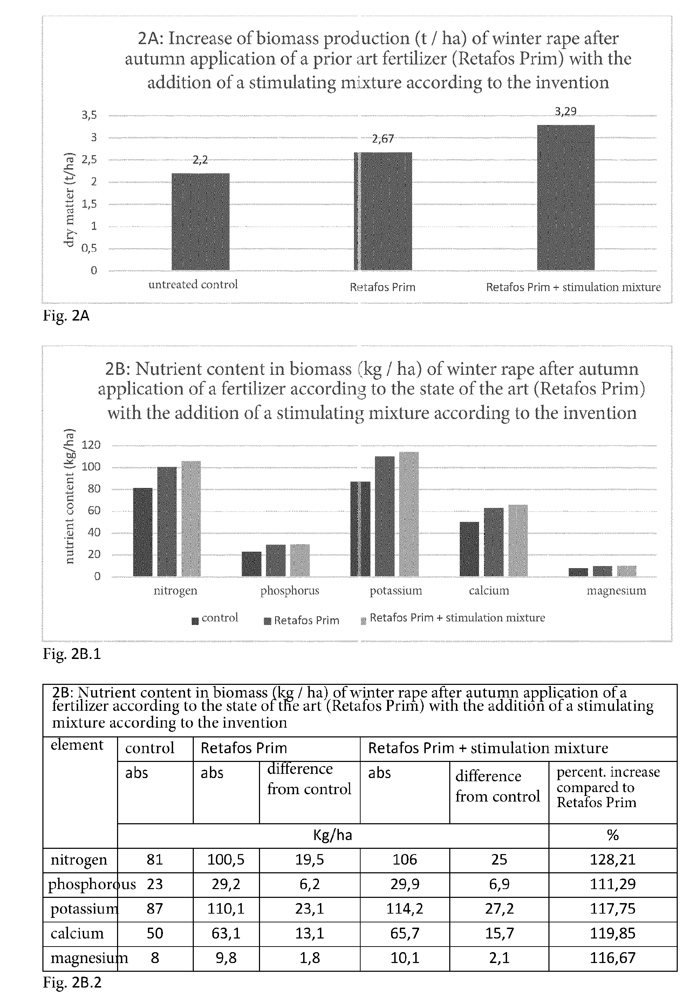

Fig. 2B.2 Nutrient content in biomass (kg/ha) of winter rapeseed after autumn application of the prior art fertiliser (Retafos Prim) with the addition of the stimulating mixture according to the invention, table

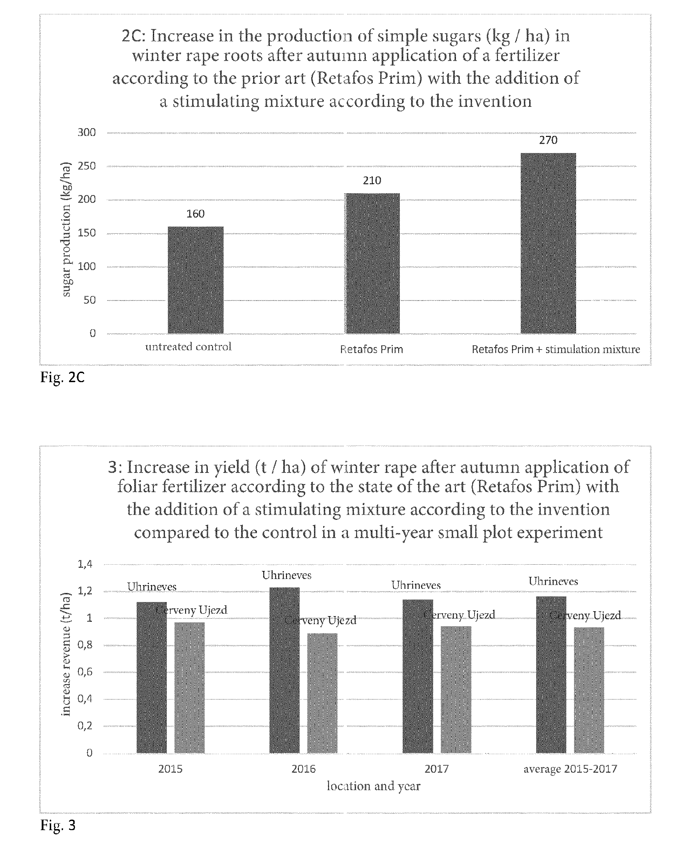

Fig. 2C Increase in the production of simple sugars (kg/ha) in winter rapeseed roots after autumn application of the prior art fertiliser (Retafos Prim) with the addition of the stimulating mixture according to the invention
Fig. 3 Increase in yield (t/ha) of winter rapeseed after autumn application of the prior art foliar fertiliser (Retafos Prim) with the addition of the stimulating mixture according to the invention compared to the control in a multi-year small-plot experiment

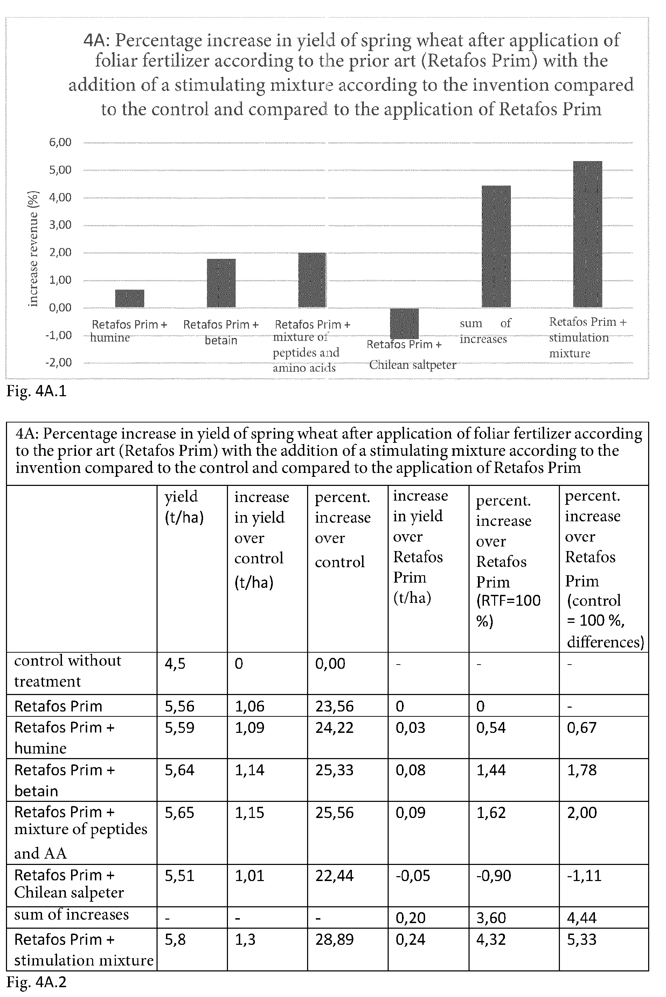

Fig. 4A.1 Percentage increase in yield of spring wheat after application of the prior art foliar fertiliser (Retafos Prim) with the addition of the stimulating mixture according to the invention compared to the control and compared to the application of Retafos Prim, graph
Fig. 4A.2 Percentage increase in yield of spring wheat after application of the prior art foliar fertiliser (Retafos Prim) with the addition of the stimulating mixture according to the invention compared to the control and compared to the application of Retafos Prim, table

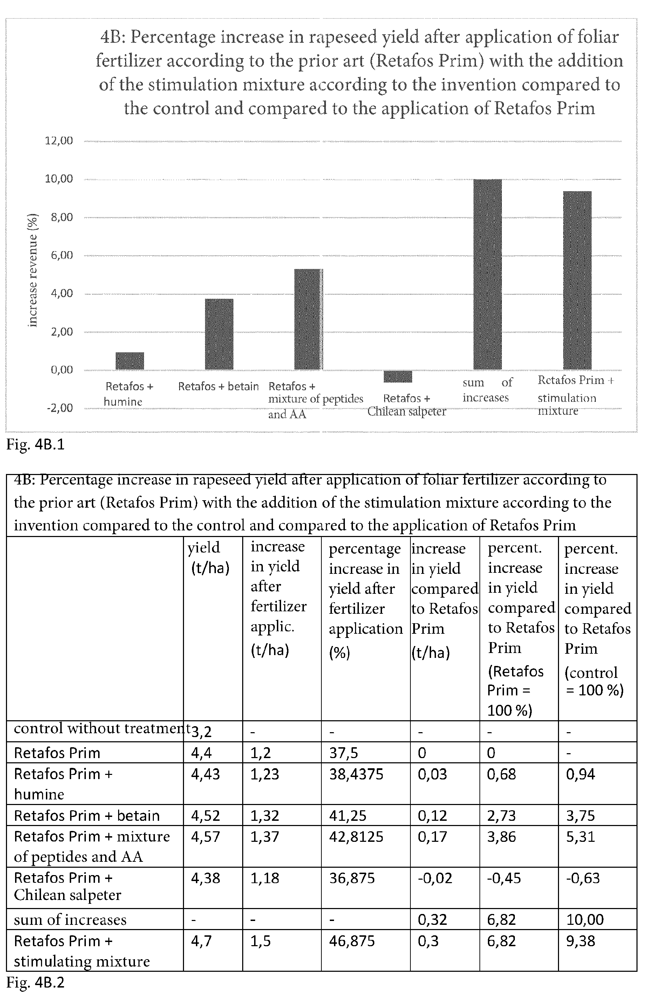

Fig. 4B.1 Percentage increase in yield of rapeseed after application of the prior art foliar fertiliser (Retafos Prim) with the addition of the stimulating mixture according to the invention compared to the control and compared to the application of Retafos Prim, graph
Fig. 4B.2 Percentage increase in yield of rapeseed after application of the prior art foliar fertiliser (Retafos Prim) with the addition of the stimulating mixture according to the invention compared to the control and compared to the application of Retafos Prim, table

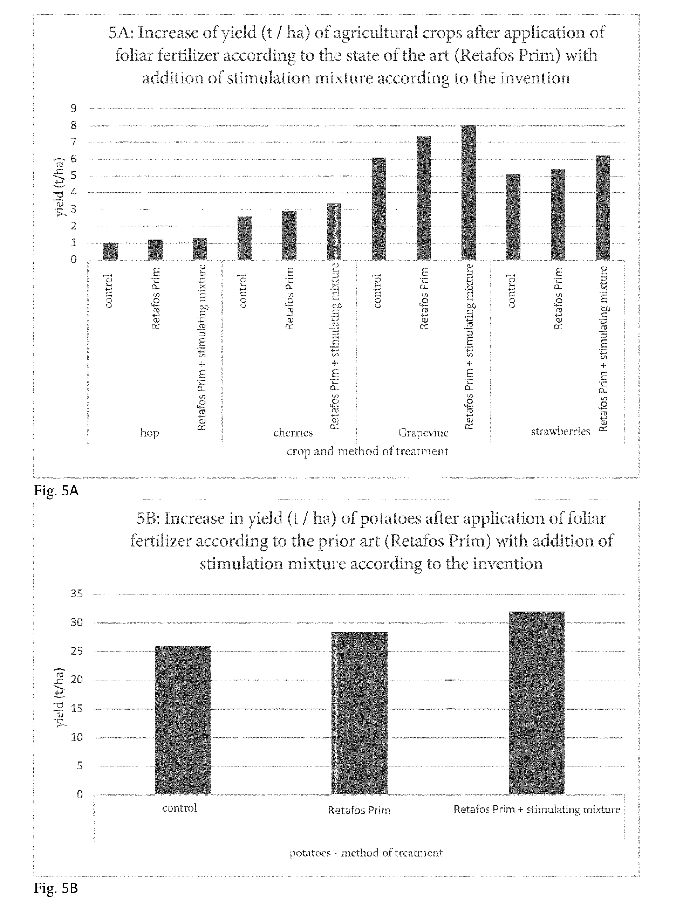

Fig. 5A Increase in yield (t/ha) of agricultural crops after application of the prior art foliar fertiliser (Retafos Prim) with the addition of the stimulating mixture according to the invention
Fig. 5B Increase in yield (t/ha) of potatoes after application of the prior art foliar fertiliser (Retafos Prim) with the addition of the stimulating mixture according to the invention

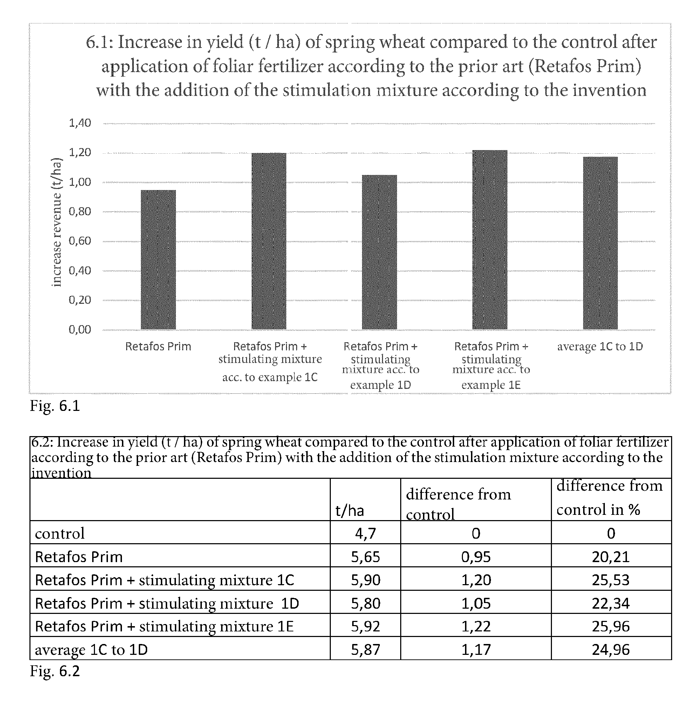

Fig. 6.1 Increase in yield (t/ha) of spring wheat compared to the control after application of the prior art foliar fertiliser (Retafos Prim) with the addition of the stimulating mixture according to the invention, graph
Fig. 6.2 Increase in yield (t/ha) of spring wheat compared to the control after application of the prior art foliar fertiliser (Retafos Prim) with the addition of the stimulating mixture according to the invention, table

### Examples of examples of the invention

### Example 1C Foliar fertiliser stimulating mixture - optimum

Rapeseed plants were pre-grown of Example 1 and treated with a foliar fertiliser stimulating mixture prepared by diluting the foliar fertiliser stimulating mixture concentrate, the foliar fertiliser concentrate and water in a ratio of 45 kg of stimulating mixture concentrate plus 1,340 kg of foliar fertiliser concentrate with 70 to 80 per cent of dry matter.

The foliar fertiliser stimulating mixture concentrate was prepared by simply mixing 20 wt% of humate solution, 50 wt% of a solution of a mix of peptides and amino acids, in particular collagen hydrolysate and betaine powder at a temperature of at least 30 °C. The composition of the foliar fertiliser stimulating mixture was as follows:

| Optimum | kg in dry matter | wt% of dry matter | kg in concentrate | wt% of concentrate |
|---|---|---|---|---|
| Water | 0.00 | 0.00 | 19.76 | 45.95 |
| H₂O | | | | |
| Betaine hydrochloride | 2.92 | 12.56 | 2.92 | 6.79 |
| (CH₃)₃NCH₂COOH Cl | | | | |
| Sodium humate | 0.94 | 4.04 | 0.94 | 2.18 |
| C₉H₈O₄Na₂ | | | | |
| Mix of peptides and amino acids | 19.39 | 83.41 | 19.39 | 45.08 |
| In total | 23.24 | 100.00 | 43.01 | 100.00 |

The weight ratio of betaine: humate: mix of peptides and amino acids in the dry matter is 1: 0.32: 6.64.

The foliar fertilizer stimulating mixture concentrate was diluted in a ratio of 45 kg of stimulating mixture concentrate plus 1,340 kg of foliar fertiliser concentrate with 70 to 80 per cent of dry matter.

The dry matter ratio of the stimulating mixture to the foliar fertiliser was 1:30.

### Example 1D Foliar fertiliser stimulating mixture - proportionally upper limit

Rapeseed plants were pre-grown of Example 1 and treated with a foliar fertiliser stimulating mixture prepared by diluting the foliar fertiliser stimulating mixture concentrate, the foliar fertiliser concentrate and water in a ratio of 15 kg of stimulating mixture concentrate plus 1,370 L of foliar fertiliser concentrate with 70 to 80 per cent of dry matter.

The foliar fertiliser stimulating mixture concentrate was prepared by simply mixing 20 wt% of humate solution, 50 wt% of a solution of a mix of peptides and amino acids and betaine powder at a temperature of at least 30 °C. The composition of the foliar fertiliser stimulating mixture was as follows:

| Proportionally upper | kg in dry matter | wt% of dry matter | kg in concentrate | wt% of concentrate |
|---|---|---|---|---|
| Water | 0.00 | 0.00 | 7.92 | 46.11 |
| H₂O | | | | |
| Betaine hydrochloride | 1.03 | 11.11 | 1.03 | 5.99 |
| (CH₃)₃NCH₂COOH Cl | | | | |
| Sodium humate | 0.51 | 5.56 | 0.51 | 2.99 |
| C₉H₈O₄Na₂ | | | | |
| Mix of peptides and amino acids | 7.71 | 83.33 | 7.71 | 44.91 |
| In total | 9.26 | 100.00 | 17.18 | 100.00 |

The weight ratio of betaine: humate: mix of peptides and amino acids in the dry matter is 1: 0.5: 7.5.

Compared to Example 1C, less betaine, less humate and less mix of peptides and amino acids were added to the fertiliser stimulating mixture, making it the nutrient poorest compared to Examples 1C and 1E.

The foliar fertiliser stimulating mixture concentrate was diluted in a ratio of 15 kg of stimulating mixture concentrate plus 1,370 kg of foliar fertiliser concentrate with 70 to 80 % of dry matter.

The dry matter ratio of the stimulating mixture to the foliar fertiliser was 1:80.

### Example 1E Foliar fertiliser stimulating mixture - proportionally lower limit

Rapeseed plants were pre-grown of Example 1 and treated with a foliar fertiliser stimulating mixture prepared by diluting the foliar fertiliser stimulating mixture concentrate, the foliar fertiliser concentrate and water in a ratio of 65 kg of stimulating mixture concentrate plus 1,300 L of foliar fertiliser concentrate with 70 to 80 per cent of dry matter.

The foliar fertiliser stimulating mixture concentrate was prepared by simply mixing 20 wt% of humate solution, 50 wt% of a solution of a mix of peptides and amino acids and betaine powder at a temperature of at least 30 °C. The composition of the foliar fertiliser stimulating mixture was as follows:

| Proportionally upper limit | kg in dry matter | wt% of dry matter | kg in concentrate | wt% of concentrate |
|---|---|---|---|---|
| Water | 0.00 | 0.00 | 27.33 | 41.38 |
| H₂O | | | | |
| Betaine hydrochloride | 10.74 | 27.74 | 10.74 | 16.26 |
| (CH₃)₃NCH₂COOH Cl | | | | |
| Sodium humate | 1.08 | 2.79 | 1.08 | 1.64 |
| C₉H₈O₄Na₂ | | | | |
| Mix of peptides and amino acids | 26.90 | 69.47 | 26.90 | 40.73 |
| In total | 38.72 | 100.00 | 66.05 | 100.00 |

The weight ratio of betaine: humate: mix of peptides and amino acids in the dry matter is 1: 0.1: 2.5.

Compared to Examples 1C and 1D, more betaine, more humate and more mix of peptides and amino acids were added to the fertiliser stimulating mixture, making it the nutrient richest compared to Examples 1C and 1E.

The foliar fertiliser stimulating mixture concentrate was diluted in a ratio of 65 kg of stimulating mixture concentrate plus 1,300 kg of foliar fertiliser concentrate with 70 to 80 % of dry matter.

The dry matter ratio of the stimulating mixture to the foliar fertiliser was 1:20.

### Example 2 Effect of foliar fertilizer and its components on crop yield

The effect of foliar fertilizer stimulating mixture on crop yield was tested on monocotyledonous and dicotyledonous plants, specifically on spring wheat and winter rapeseed, using a hydroponic experiment in a roofed space of plastic greenhouse without fronts and with ventilation gaps above the base along its entire length. This eliminated the effect of precipitation and ensured that the temperature in the greenhouse was identical to that in the open space.

The hydroponic experiment took place in plastic containers filled with a complete nutrient solution, i.e. a solution providing a full spectrum of nutrients in sufficient concentrations for plant growth.

The composition of the nutrient solution was as follows:

| Amount of nutrients [g/1,000 L] | | | | | | | | | | | |
|---|---|---|---|---|---|---|---|---|---|---|---|
| N | P | K | Ca | Mg | S | B | Mn | Zn | Cu | Fe | Mo |
| 200 | 60 | 301 | 170 | 50 | 66 | 0.30 | 2.31 | 0.10 | 0.10 | 11.85 | 0.20 |

Yields of spring wheat (Fig. 1A) and winter rapeseed (Fig. 1B) are shown in tonnes per hectare and compared with the untreated control. The application of all substances was carried out with a hand sprayer so that the dose per unit area corresponds to 5 L of a mixture of concentrate of the foliar fertilizer stimulating mixture of Example 1C mixed with the concentrate of the prior art foliar fertiliser Retafos Prim in a ratio of 1:44 in 250 L of water/ha, thus a dose of 255 L of foliar fertiliser with stimulating mixture per hectare. Also, the amount of all tested components corresponded to the concentration contained in the dose of 5 L of the concentrate of foliar fertiliser with stimulating mixture per hectare or 255 L of foliar fertiliser with stimulating mixture per hectare. All tested mixtures were applied in the same way as foliar fertiliser - i.e. with 250 L of water/ha.

As can be seen from Figures 1A and 1B, the individual components of the foliar fertiliser simulating mixture have different effects on different crops. In spring wheat, there was even a demonstrable synergistic effect of each of the stimulating mixture components.

### Example 3 Effect of foliar fertiliser stimulating mixture on dry matter production, evaluation of nutrient content in biomass and metabolite formation

Winter rapeseed was selected to evaluate the effect of the stimulating mixture of foliar fertiliser on the formation of metabolites, dry matter production and nutrient uptake by the plant from the soil. The experiment was carried out at 4 sites in the Czech Republic - Moravské Budějovice, Budkov, Střelice and Dubicko, always on 4ha fields with harvested straw and track lines perpendicular to the contour line, so that no variant or experimental area was favoured. Samples were taken from an area of 30 x 30 m staked out just before the application of the foliar fertiliser stimulating mixture together with the prior art foliar fertiliser Retafos Prim in order to eliminate unbalanced areas, grub holes made by slugs, flea beetles, etc.

For comparison, the experimental area was divided into treated and untreated. The size of the plants did not differ before the application of foliar fertiliser with the stimulating mixture. At the time of application, the root necks of all plants were a maximum of 6 mm thick.

The foliar fertiliser with stimulating mixture of Example 1C was applied to the experimental area by spraying in a dose of 5 L of a mixture of concentrate of the foliar fertiliser stimulating mixture of Example 1C mixed with concentrate of the prior art foliar fertiliser Retafos Prim in a ratio of 1:44 in 200 to 300 L of water/ha, depending on the meteorological conditions. The foliar fertiliser with the stimulating mixture was applied in the growth phase of rapeseed, i.e. when the plant showed 4 to 6 large leaves - BBCH 14 to 16, before the arrival of night frosts, when the night temperature did not fall below 0 °C and the day temperature did not fall below 8 °C.

Plant sampling was performed from the marked area of the field at the boundary line between the treated and untreated variants in order to eliminate the effect of field heterogeneity as much as possible. At 15 different locations on the marked area, 15 to 30 plants of the same size were taken, depending on the size of the cover, at least 1 m from the track line. Plant sampling was performed:
1. before application of foliar fertiliser with stimulating mixture - the whole above-ground part of the plants is taken, with the root without dead leaves,
2. three weeks after application of foliar fertiliser with stimulating mixture - the whole above-ground part of the plants is taken, with the root without dead leaves.

The above-ground part of the plants was separated from the root immediately after transport to the laboratory, and both parts of the plants were further processed of Examples 3A and 3 B.

### Example 3 A Dry matter production and nutrient content in biomass

Determination of dry matter and nutrient content in dry matter was performed after drying the above-ground part of plants to constant weight in a laboratory oven at 105 °C. The determination of the nutrient content was performed by AAS under standard conditions; except for the nitrogen determination, which was performed according to Dumas. The increase in dry matter production is shown in Figure 2A and nutrient taking is shown in Figure 2B, which are average values from 4 research sites. Figure 2B shows that although calcium and magnesium are not applied to plants in the foliar fertiliser, the stimulating mixture can excite the plant so that it is able to draw more nutrients from the soil than the untreated control.

### Example 3 B Metabolite formation

Determination of the content of metabolites - sugars was performed after drying the cut plant root to constant weight in a laboratory oven at 60 °C. After drying, the sugar content in the dry root mass was determined by the Luff-Schoorl method. The results of the determination of sugars are shown in Figure 2 C. Minor differences due to different natural conditions were measured between sites. The amount of precipitation, a higher occurrence of pests due to neighbouring vegetation covers, a different sowing date, a different variety, etc. have a significant effect on the yield. Therefore, 4 different localities across the Czech Republic were selected.

Example 4 *Effect of foliar fertiliser on crop yield - perennial small-plot experiments* Winter rapeseed was selected to evaluate the effect of foliar fertiliser with stimulating mixture on crop yield. The experiment took place at two sites in the Czech Republic - Uhříněves and ČervenýÚjezd in the years 2015 to 2017.

For comparison, the experimental area was divided into treated and untreated. All variants of the experiment were performed in 4 replicates. The size of the plants did not differ before the application of foliar fertiliser with stimulating mixture. At the time of application, all plants had root necks thick of maximum 6 mm. Other agrotechnical interventions for fertilisation and plant protection were always uniform for the entire experimental area according to the need for nutrients and the pressure from weeds, diseases and pests.

The foliar fertiliser with stimulating mixture of Example 1C was applied to the experimental area by spraying in a dose of 5 L of a mixture of concentrate of foliar fertiliser stimulating mixture of Example 1C mixed with the concentrate of the prior art foliar fertiliser Retafos Prim in a ratio of 1:44 in 200 to 300 L of water/ha, depending on the meteorological conditions. The foliar fertiliser with the stimulating mixture was applied in the growth phase of rapeseed, i.e. when the plant showed 4 to 6 large leaves - BBCH 14 to 16, before the arrival of night frosts, when the night temperature did not fall below 0 °C and the day temperature did not fall below 8 °C.

Samples of plants were taken from the entire experimental area with a small-plot harvester. The results of the experiment are shown in Figure 3. Minor differences due to different natural conditions were measured between sites and individual years. The amount of precipitation, higher occurrence of pests due to neighbouring vegetation covers, different sowing date, different variety, etc. have a significant effect on the yield. On average, the result of a significant increase in yield was obtained, namely by an average of 1.05 t/ha compared to the untreated control areas, respectively by 1.163 t/ha for Uhříněves and by 0.93 t/ha for ČervenýÚjezd

### Example 5 Effect of components of foliar fertiliser stimulating mixture on crop yield - development of stimulating mixture according to the invention

Winter rapeseed and spring wheat were selected to evaluate the effect of components of the foliar fertiliser stimulating mixture on crop yield. The experiment was carried out at the sites in Červený Újezd in 2018 as a small-plot experiment.

For comparison, the experimental area was divided into treated and untreated. All variants of the experiment were performed in three replicates. The size of the plants did not differ before the application of foliar fertiliser. Other agrotechnical interventions for fertilisation and plant protection were always uniform for the entire experimental area according to the need for nutrients and the pressure from weeds, diseases and pests.

The prior art foliar fertiliser Retafos Prim, Chilean saltpetre, betaine, a mix of peptides and amino acids and sodium humate were applied to the experimental area by spraying. Retafos Prim was applied in a dose of 5 L of concentrate per hectare diluted with 300 L of water per hectare. Chilean saltpetre, betaine and the mix of peptides and amino acids and sodium humate were applied in a dose corresponding to the amount of stimulating mixture mixed with foliar fertiliser of Example 1C, i.e. according to the table below, and also diluted in a ratio of 5 L of concentrate + 300 L of water per hectare.

| Mixture | kg |
|---|---|
| Water | 99.72 |
| Betaine hydrochloride (CH3)3NCH2COOH Cl | 0.28 |
| Water | 99.91 |
| Sodium humate | 0.09 |
| Water | 98.13 |
| Mix of peptides and amino acids | 1.87 |
| Water | 99.17 |
| Chilean saltpetre | 0.83 |

All fertilisers were applied in the growth phase of rapeseed and wheat in autumn, i.e. when the rapeseed showed 4 to 6 large leaves - BBCH 14 to 16, and the wheat showed at least two fully developed leaves. The application took place before the arrival of night frosts, when the night temperature did not fall below 0 °C and the day temperature did not fall below 8 °C.

Samples of plants were taken from the entire experimental area with a small-plot harvester. The results of the experiment are shown in Figure 3. The amount of precipitation, higher occurrence of pests due to neighbouring vegetation covers, different sowing date, etc. have a significant effect on the yield.

It has been shown that not all selected components for the development of a foliar fertiliser stimulating mixture are effective. Chilean saltpetre showed a reduction in the effect of Retafos Prim, probably due to its low utilisation by plants and high reactivity. On the contrary, a synergistic effect of fertiliser on spring wheat yield was surprisingly demonstrated. All three mixtures, i.e. betaine, sodium humate and a mix of peptides and amino acids together with Retafos Prim, showed 0.89% higher effect than the sum of the individual components alone. The synergistic effect is shown in Figure 4A. In contrast, winter rapeseed showed a combined effect of all components 0.62% lower. This can be explained by the diversity of crops. Not every crop has the same demands on water and heat, one tolerates drought better than the other, and so the overall effect of foliar fertiliser components cannot be assessed in absolute terms, but as a positive effect on a living plant system.

### Example 6 Effect of foliar fertiliser stimulating mixture on crop yield - one-year experiments with fruit / vegetables

To evaluate the effect of the stimulating mixture of foliar fertiliser on the yield of fruits and vegetables, the following were selected: hops, cherries, grapevine, strawberries and potatoes. The experiment was carried out for each crop separately at different sites in the Czech Republic in the spring of 2018.

For comparison, the experimental area was divided into untreated - control, treated with the prior art foliar fertiliser Retafos Prim and treated with Retafos Prim with the stimulating mixture according to the invention. All variants of the experiment were performed in triplicate. The plant sizes of one crop did not differ before fertiliser application. At the time of application, the plants were evaluated as follows:
Hops: growth phase, the plant is wound to support;
Cherries: after flowering, the plant has two to 4 large developed leaves from each bud;
Grapevine: Before flowering, the plant has 4 to 6 large developed leaves from each bud
Strawberries: before flowering, the plant is in the growth phase and has 4 to 6 large developed leaves
Potatoes: growth phase, the plant has 4 to 6 large developed leaves

Other agrotechnical interventions for fertilisation and plant protection were always uniform for the entire experimental area according to the need for nutrients and the pressure from weeds, diseases and pests.

The stimulating mixture of Example 1C was applied together with the prior art foliar fertiliser Retafos Prim to the experimental surface by spraying in a dose of 5 L of the concentrate of the foliar fertiliser stimulating mixture of Example 1C mixed with the concentrate of the prior art foliar fertiliser Retafos Prim in a ratio of 1:10 diluted with 500 L of water for hops, 1,000 L of water for cherries, 400 L of water for grapevine, 2,500 L of water for strawberries and 200 L of water for potatoes per hectare of standard planting.

The fruits of the plants were harvested from the entire experimental area according to the given crop, usually by hand. The results of the yield increase are shown in Figures 5A and 5B. The amount of precipitation, higher occurrence of pests due to neighbouring vegetation covers, different sowing dates, etc. have a significant effect on the yield. On average, a significant increase in yield was obtained, namely by 26 per cent for hops, 29 per cent for cherries, 32 per cent for grapevine, 21 per cent for strawberries and 23 per cent for potatoes compared to the control.

### Example 7 Effect of foliar fertiliser stimulating mixture on crop yield - one-year experiments with wheat

Wheat was selected to evaluate the effect of different variants of the stimulating mixture of foliar fertiliser on the yield. The small-plot experiment was carried out on the experimental fields in 2018 and 2019.

For comparison, the experimental area was divided into untreated - control, treated with the prior art foliar fertiliser Retafos Prim and treated with Retafos Prim with the stimulating mixture according to the Examples 1C, 1D and 1E. All variants of the experiment were performed in triplicate. The size of the plants of one crop did not differ before the application of the fertiliser; during the application the plants were in the growth phase and had 2 developed leaves.

Other agrotechnical interventions for fertilisation and plant protection were always uniform for the entire experimental area according to the need for nutrients and the pressure from weeds, diseases and pests.

The stimulating mixture of Examples 1C, 1D and 1E was applied to the experimental area in autumn by spraying in a dose of 5 L of a mixture of concentrate of the foliar fertiliser stimulating mixture of Example 1C mixed with the concentrate of the prior art foliar fertiliser Retafos Prim in a ratio of 1:100 diluted with 300 L of water per hectare of experimental area.

The harvest was performed with a small-plot harvester from the entire experimental area. The results of the yield increase are shown in Figures 6.1 and 6.2. The amount of precipitation, higher occurrence of pests due to neighbouring covers, etc. has a significant effect on the yield.

The stimulating mixture of Example 1D represents a high amount of humate and mix of peptides and amino acids compared to betaine, but this is the poorest embodiment as far as nutrients are concerned. The stimulating mixture of Example 1E represents a low amount of humate and mix of peptides and amino acids compared to betaine, but this is the richest embodiment as far as nutrients are concerned. The stimulating mixture of Example 1C represents the optimal amount of betaine, humate and the mix of peptides and amino acids. As can be seen from the results in Figures 6.1 and 6.2, the significant increase in the content of all three components - 1E led to only a small increase in yield - by 0.43 per cent compared to 1C. Therefore, the stimulating mixture of Example 1C was evaluated as the ideal composition.

### Applicability in Industry

A plant foliar fertiliser stimulating mixture usable in combination with any foliar fertiliser as extra-root nutrition for monocotyledonous and dicotyledonous plants, wherein the stimulating mixture can be applied with foliar fertiliser both during the growing season of the plant to support it in the season and in autumn to support the plant in the season to come.

## Claims

1. A plant growth stimulating mixture, **characterized in that** it consists of betaine, humic substances and a mix of peptides and amino acids in a weight ratio of 1: 0.1 to 0.5: 2.5 to 7.5.

2. The plant growth stimulating mixture according to Claim 1, **characterized in that** the betaine, the humic substances and the mix of peptides and amino acids are in the form of an aqueous solution.

3. The plant growth stimulating mixture according to Claim 1, **characterized in that** it comprises betaine, an aqueous solution of humic substances and an aqueous solution of mix of peptides and amino acids, wherein the aqueous solution of humic substances contains at least 10 per cent by weight of humic substances and the aqueous solution of the mix of peptides and amino acids contains at least 30 per cent by weight of the mix of peptides and amino acids.

4. The plant growth stimulating mixture according to Claim 1, **characterized in that** the weight ratio of betaine, humic substances and mix of peptides and amino acids is 1: 0.3 to 0.5: 4 to 6.

5. The plant growth stimulating mixture according to Claim 2, **characterized in that** the concentration of betaine is 2 to 1,050 mg/L.

6. The plant growth stimulating mixture according to Claim 2, **characterized in that** the concentration of humic substances is 0.2 to 525 mg/L.

7. The plant growth stimulating mixture according to Claim 2, **characterized in that** the concentration of the mix of peptides and amino acids is 5 to 7,875 mg/L.

8. The plant growth stimulating mixture according to Claim 1, **characterized in that** the mix of peptides and amino acids comprises glycine, proline, glutamic acid, alanine and hydroxyproline.

9. The plant growth stimulating mixture according to Claim 8, **characterized in that** the mix of peptides and amino acids contains 15 to 35 per cent by weight of glycine, 5 to 25 per cent by weight of proline, 5 to 25 per cent by weight of glutamic acid, 5 to 25 per cent by weight of alanine and 5 to 25 per cent by weight of hydroxyproline in dry matter.

10. Use of the mixture according to Claim 5 or 6 or 7 for application to the leaves of plants.

## Patentansprüche

1. Eine Mischung zur Stimulation des Pflanzenwachstums, welche sich **dadurch kennzeichnet, dass** sie Betain, Huminstoffe und eine Mischung aus Peptiden und Aminosäuren im gegenseitigen Gewichtsverhältnis von 1 : 0,1 bis 0,5 : 2,5 bis 7,5 enthält.

2. Eine Mischung zur Stimulation des Pflanzenwachstums nach dem Anspruch 1, welche sich **dadurch kennzeichnet, dass** Betain, Huminstoffe und eine Mischung aus Peptiden und Aminosäuren in Form einer wässrigen Lösung sind.

3. Eine Mischung zur Stimulation des Pflanzenwachstums nach dem Anspruch 1, welche sich **dadurch kennzeichnet, dass** sie aus Betain, einer wässrigen Lösung von Huminstoffen und einer wässrigen Lösung einer Mischung aus Peptiden und Aminosäuren gebildet ist, wobei die wässrige Lösung der Huminstoffe mindestens 10 Gew.-% Huminstoffe und die wässrige Lösung der Mischung aus Peptiden und Aminosäuren mindestens 30 Gew.-% der Mischung aus Peptiden und Aminosäuren enthält.

4. Eine Mischung zur Stimulation des Pflanzenwachstums nach dem Anspruch 1, welche sich **dadurch kennzeichnet, dass** das Gewichtsverhältnis von Betain, Huminstoffen und einer Mischung aus Peptiden und Aminosäuren 1 : 0,3 bis 0,5 : 4 bis 6 ist.

5. Eine Mischung zur Stimulation des Pflanzenwachstums nach dem Anspruch 2, welche sich **dadurch kennzeichnet, dass** die Betainkonzentration 2 bis 1050 mg/l beträgt.

6. Eine Mischung zur Stimulation des Pflanzenwachstums nach dem Anspruch 2, welche sich **dadurch kennzeichnet, dass** die Konzentration von Huminstoffen 0,2 bis 525 mg/l beträgt.

7. Eine Mischung zur Stimulation des Pflanzenwachstums nach dem Anspruch 2, welche sich **dadurch kennzeichnet, dass** die Konzentration der Mischung aus Peptiden und Aminosäuren 5 bis 7875 mg/l beträgt.

8. Eine Mischung zur Stimulation des Pflanzenwachstums nach dem Anspruch 1, welche sich **dadurch kennzeichnet, dass** die Mischung aus Peptiden und Aminosäuren Glycin, Prolin, Glutaminsäure, Alanin und Hydroxyprolin enthält.

9. Eine Mischung zur Stimulation des Pflanzenwachstums nach dem Anspruch 8, welche sich **dadurch kennzeichnet, dass** die Mischung aus Peptiden und Aminosäuren 15 bis 35 Gew.-% Glycin, 5 bis 25 Gew.-% Prolin, 5 bis 25 Gew.- % Glutaminsäure, 5 bis 25 Gew.-% Alanin und 5 bis 25 Gew.-% Hydroxyprolin in der Trockenmasse enthält.

10. Die Verwendung einer Mischung nach dem Anspruch 5 oder 6 oder 7 zur Anwendung auf Pflanzenblättern.

## Revendications

1. Mélange destiné à stimuler la croissance des plantes, **caractérisé en ce qu'**il contient de la bétaïne, des substances humiques et un mélange de peptides et d'acides aminés, dans un rapport massique respectif de 1 ; 0,1 à 0,5 ; 2,5 à 7,5.

2. Mélange destiné à stimuler la croissance des plantes selon la revendication 1, **caractérisé en ce que** la bétaïne, les substances humiques et le mélange de peptides et d'acides aminés se présentent sous forme de solutions aqueuses.

3. Mélange destiné à stimuler la croissance des plantes selon la revendication 1, **caractérisé en ce qu'**il est constitué de bétaïne, d'une solution aqueuse de substances humiques et d'une solution aqueuse d'un mélange de peptides et d'acides aminés, la solution aqueuse de substances humiques contenant au moins 10 % en poids de substances humiques et la solution aqueuse du mélange de peptides et d'acides aminés contenant au moins 30 % en poids du mélange de peptides et d'acides aminés.

4. Mélange destiné à stimuler la croissance des plantes selon la revendication 1, **caractérisé en ce que** le rapport massique de la bétaïne, des substances humiques et du mélange de peptides et d'acides aminés est respectivement de 1 ; 0,3 à 0,5 ; 4 à 6.

5. Mélange destiné à stimuler la croissance des plantes selon la revendication 2, **caractérisé en ce que** la concentration en bétaïne est de 2 à 1 050 mg/l.

6. Mélange destiné à stimuler la croissance des plantes selon la revendication 2, **caractérisé en ce que** la concentration en substances humiques est de 0,2 à 525 mg/l.

7. Mélange destiné à stimuler la croissance des plantes selon la revendication 2, **caractérisé en ce que** la concentration du mélange de peptides et d'acides aminés est de 5 à 7 875 mg/l.

8. Mélange destiné à stimuler la croissance des plantes selon la revendication 1, **caractérisé en ce que** le mélange de peptides et d'acides aminés contient de la glycine, de la proline, de l'acide glutamique, de l'alanine et de l'hydroxyproline.

9. Mélange destiné à stimuler la croissance des plantes selon la revendication 8, **caractérisé en ce que** le mélange de peptides et d'acides aminés contient, dans la matière sèche, 15 à 35 % en poids de glycine, 5 à 25 % en poids de proline, 5 à 25 % en poids d'acide glutamique, 5 à 25 % en poids d'alanine et 5 à 25 % en poids d'hydroxyproline.

10. Utilisation du mélange selon la revendication 5 ou 6 ou 7 par application sur les feuilles des plantes.
